# EUROPÄISCHE PATENTSCHRIFT

(11) **EP 3 822 203 B1**
(45) Veröffentlichungstag und Bekanntmachung des Hinweises auf die Patenterteilung: **09.08.2023**
(21) Anmeldenummer: 20206651.0
(22) Anmeldetag: 10.11.2020
(51) Int. Cl.: B65G 57/03, B65G 60/00, B65G 61/00

(54) **VERFAHREN ZUR AUTOMATISIERTEN UMPALLETIERUNG VON PACKGUT**
METHOD FOR THE AUTOMATED MOVEMENT OF PACKED GOODS BETWEEN PALLETS
PROCÉDÉ DE REPALETTISATION AUTOMATISÉE DES MARCHANDISES EMBALLÉES

(30) Priorität: 12.11.2019 LU 101481
(43) Veröffentlichungstag der Anmeldung: 19.05.2021
(73) Patentinhaber: Cellumation GmbH, 28357 Bremen (DE)
(72) Erfinder: URIARTE, CLAUDIO, 28359 Bremen (DE); KUZNETSOV, IVAN, 28359 Bremen (DE); BANDE FIRVIDA, MIGUEL, 28359 Bremen (DE)
(74) Vertreter: RCD Patent Giesen, Schmelcher & Griebel Patentwanwälte PartG mbB

(56) Entgegenhaltungen:
- JP-A- S5 030 266
- cellumation: "celluveyor - Omnidirectional Cellular Conveyor", , 15. März 2016 (2016-03-15), Seiten 1-5, XP054980722, Gefunden im Internet: URL:https://www.youtube.com/watch?v=mBCccg t8bZs [gefunden am 2020-07-24]
- cellumation: "Celluveyor Anwendungsbeispiel - Palettenlagenvereinzelung (Descrambler)", , 15. März 2016 (2016-03-15), Seiten 1-3, XP054980723, Gefunden im Internet: URL:https://www.youtube.com/watch?v=PyWVVw zw2Vo [gefunden am 2020-07-24]

## Beschreibung

Die Erfindung betrifft ein Verfahren zur automatisierten Umpalettierung von Packgut.

### Hintergrund der Erfindung

In der Logistik von Waren- und Materialflüssen spielt das Sortieren, Zusammenstellen und Neukonfigurieren von Packgut eine wichtige Rolle. Zunehmende Automatisierung verlangt immer schnellere und genauere Prozesse.

In einem Aspekt des Waren- und Materialtransports werden in unterschiedlichen logistischen Prozessen oder Produktionsprozessen Objekte in Lagen gestapelt, insbesondere zur Lagerung, zur Kommissionierung oder zum platzsparenden Transport. Bei manchen Prozessen muss eine vorherige Anordnung der Objekte zu einander in der Ebene jedoch verändert werden. Dabei wird das Muster der Ursprungslage in einem Zielmuster verändert. Das neuerzeugte Lagenmuster kann dabei in der Anzahl, Größe und Geometrie vom ursprünglichen Muster abweichen. Dieser Prozess wird als Umkonfiguration oder Umpalettierung einer Lage bezeichnet. Eine solche Umkonfiguration von Lagen kommt in der Logistik zum Beispiel bei der Umpalettierung von Paletten oder bei der Beladung von Tablaren (englisch: Trays) in Lagerungsprozessen häufig vor. Obwohl der Begriff Umpalettierung im engeren Sinn das (in der Regel vollautomatische) Umsetzen der Ware (im Ganzen) von einer Palette auf eine andere bezeichnet, wird oft auch das Umkonfigurieren (man kann auch von lagenweisem Umpacken sprechen) wie vorstehend beschrieben darunter verstanden. Diese erweitere Bedeutung wird hier und im Folgenden beibehalten.

Die optimierte automatisierte Palettierung bzw. Depalettierung von Kartons, Kisten, Kästen, Säcken, Rädern, Eimern, Platten, Tablare, Trays und weiteren Produkten erfordert ein optimales Zusammenspiel von vielen Faktoren. Ein optimiertes Zusammenspiel von Palettierer - Palettierroboter Systemen, Greifersystemen, Fördersystemen und der entsprechenden Palettierungssoftware stehen im Vordergrund.

Im diesem Zusammenhang sind viele verschiedene Lösungen bekannt. Die meisten basieren auf einer Kombination von Greifrobotern und Fördersystemen.

So gibt es beispielsweise Anlagen, die die Beladung einer ganzen Palette ohne Entnahme der einzelnen Packguteinheiten auf eine anders dimensionierte Palette oder eine Palette aus einem anderen Material umsetzen. Bei dieser Art der Umpalettierung wird mithin nur der "Träger" gewechselt, es findet ein sogenannter Palettentausch statt. Die Anordnungen der Lagen zueinander und das Lagenmuster werden dabei nicht verändert. Dies kann durch das Anheben der palettierten Ware von der Palette und anschließendes Wechsel der Palette, wie beispielsweise in der EP2349886B1 beschrieben, realisiert werden. Alternativ kann die Ware von einer Palette auf die andere verschoben werden.

Eine weitere Möglichkeit stellt das Wenden der Palette dar. Dabei wird die palettierte Ware - meist samt Ursprungspalette - geklemmt und angehoben, umgedreht und anschließend kopfüber auf eine Zielpalette abgelegt. Die ursprüngliche Palette, die nun auf der Ware liegt, kann entnommen werden. Beim Palettenwenden ändert die Ware die Orientierung und steht nach dem Palettentausch kopfüber. Das Lagenmuster wird dabei nicht verändert. Sollte die Ware die ursprüngliche Orientierung behalten, muss das Wenden ein zweites Mal realisiert werden.

Alle Varianten des Palettenwechsels zeichnen sich dadurch aus, dass die Palette schnell ausgetauscht werden kann. Sie haben aber den Nachteil, dass sie nur angewendet werden können, wenn die Zielpalette mindestens die gleichen Maße wie die ursprüngliche Palette hat. Wenn die Zielpalette kleiner als die ursprüngliche Palette ist, kann die Methode nicht angewendet werden. Wenn die Zielpalette eine größere Grundfläche als die ursprüngliche Palette hat, wird Fläche der Zielpalette nicht vollständig benutzt. Dadurch entstehen Flächenverluste, da ein Teil der Fläche der Zielpalette nicht benutzt wird. Die Umpalettierung einer vollständig beladenen EURO-Palette in eine australische Palette lässt beispielsweise ca. 30% Fläche unbenutzt.

Eine weitere Möglichkeit des Umpalettierens stellt die manuelle Umpalettierung der Ware dar. Dabei wird die Ware Stück für Stück per Hand aus der ursprünglichen Palette entnommen und auf eine Zielpalette abgelegt. Das Anheben und Umsetzen kann allein durch Muskelkraft oder durch die Verwendung von Arbeitsmitteln wie zum Beispiel vakuumgetriebenen Hubsystemen vorgenommen werden, wie beispielsweise in der JP S50 30266 gezeigt. Ein Vorteil des manuellen Umpalettierens liegt darin, dass das Lagenmuster der Zielpalette anders als das Lagenmuster der ursprünglichen Palette sein kann. Durch die Änderung des Lagenmusters kann die Fläche der Zielpalette optimal benutzt werden. Die Methode ist jedoch sehr langsam, arbeitsintensiv und physisch belastend für die Mitarbeiter. Ohne die Verwendung von Arbeitsmitteln ist die Arbeit insbesondere ergonomisch sehr belastend.

Aus diesem Grund geht der Trend immer mehr zur Automatisierung der Aufgabe des Umpalettierens beziehungsweise Umkonfigurierens. Die Ware wird in den bisher bekannten Varianten grundsätzlich mittels Handling-Systemen und/oder Roboter aus der ursprünglichen Palette entnommen (depalletieren) und anschließend auf die Zielpalette beladen (palettieren). Das automatische Umpalettieren wird auf unterschiedliche Weise realisiert.

Es ist ein Umpalettierer bekannt, welcher aus einer Depalletieranlage und einer Palettieranlage besteht, die mittels Fördertechnik verbunden sind. Beim Umpalettieren wird die oberste Lage der ursprünglichen Palette Reihe für Reihe entnommen und vereinzelt. Die Ware wird einzeln und hintereinander über einen Rollenförderer "im Gänsemarsch" zu der Palettieranlage geführt. Die Ware wird an die Palettieranlage übergeben, wo die Lagen reihenweise generiert werden und auf der Zielpalette abgelegt. Teile einer solchen Anlage sind zum Beispiel von der Anmelderin unter dem Titel "Celluveyor Cellular Conveyor" und "Celluveyor Anwendungsbeispiel Palettenlagenvereinzelung (Descrambler)" veröffentlicht worden. Diese Anlage hat den Vorteil, dass die Fläche der Zielpalette optimal benutzt werden kann, da das Lagenmuster frei konfiguriert werden kann. Bei geeignetem Lagenmuster der ursprünglichen Palette kann das Umpalettieren recht schnell erfolgen. Der Nachteil liegt in dem großen Flächenbedarf und den hohen Kosten der Anlage. Bei irregulärem Lagenmuster der ursprünglichen Palette kann das Umpalettieren zudem sehr zeitintensiv sein und zusätzlich Bauteile erfordern.

Ein weiterer Ansatz des automatisierten Umpalettierens besteht aus einem Industrieroboter, welcher einzelne Objekte aus der ursprünglichen Palette entnimmt und diese direkt auf einer Zielpalette ablegt. Es können auch mehrere Zielpaletten aus einer einzigen Ursprungspalette bedient werden. In diesem Fall wird das System um eine Linearführung des Roboters erweitert. Das System ist sehr platzsparend, da die Ware sofort nach der Entladung auf der Zielpalette abgelegt wird, ohne dass sie zwischengespeichert werden muss. Durch den Einzelgriff und Einzelhandhabung ist das Umpalettieren jedoch sehr zeitintensiv. In einer Abwandlung dieses Ansatzes entnimmt der Roboter die Objekte einzeln und setzt sie auf einer Pufferfläche ab. Die Objekte werden dann an eine Entnahmestelle transportiert und von dem Roboter - wiederum einzeln oder auch zusammen- aufgenommen und auf der Zielpalette abgelegt.

Die US-Patentanmeldung US2007280814 offenbart eine Anlage zur Herstellung von Mixed-Case Lagen aus Single-Case Lagen. Der Prozess besteht aus einer Depalettierung, einer Vereinzelung der Pakete, dem Puffern der Pakete in Pufferflächen, die Bildung einer neuen Lage, und anschließend einer Palettierung. Die Anlage ist somit eine Umpalettieranlage im Sinne der Erfindung. Die Vorrichtung besteht aus mehreren Förderstrecken für das Einführen von artikelreinen Ursprungspaletten, einem Industrieroboter für die Erstellung der neuen Lagen und einem Kugeltisch mit nicht angetriebenen Kugeln, auf dem die Produkte einzeln vom Roboter während der Lagenerstellung verschoben werden. Der Kugeltisch kann als nichtangetriebene omnidirektionale Fläche betrachtet werden. Sie ist jedoch keine Förderfläche, weil sie nicht in der Lage ist mit eigenen Mitteln die Objekte aktiv zu bewegen.

Bei den eingesetzten Fördersystemen sind daneben vor Allem die Rollenförderer und sogenannte Matrixförderer zu nennen, mit deren Hilfe die Packguteinheiten gezielt bewegt werden.

Ausgehend von dieser Situation ist es Aufgabe der Erfindung ein Verfahren zur automatisierten Umpalettierung von Packgut zur Verfügung zu stellen, die es ermöglicht die Umpalettierung mit geringerem Zeitaufwand durchzuführen, eine variable Neukonfiguration der Ware zu ermöglichen und gleichzeitig weniger Raum zu benötigen.

Die Aufgabe wird gelöst, durch ein Verfahren gemäß Anspruch 1. Weitere vorteilhafte Ausgestaltungen sind insbesondere Gegenstand der abhängigen Ansprüche.

Die Erfindung betrifft ein Verfahren zur automatisierten Umpalettierung von Packgut, wobei das Verfahren durchzuführen ist mit einem Fördertisch mit Einrichtungen zum omnidirektionalen Bewegen von Packgut aus einer Ursprungslage, gebildet von zu rekonfigurierenden Packguteinheiten, in eine Ziellage, gebildet von Packguteinheiten, wobei der Fördertisch eine Fläche aufweist, die größer ist als die Fläche, die durch eine Ursprungslage der zu konfigurierenden Packguteinheiten eingenommen wird, wobei das Verfahren die folgenden Schritte aufweist:
- Bereitstellen einer Ursprungslage von Packguteinheiten auf dem Fördertisch,
- automatisierte Vereinzelung der Packguteinheiten durch den Fördertisch derart, dass zwischen mindestens zwei der Packguteinheiten Rangierabstände entstehen,
- Bewegen der Packguteinheiten auf eine vorbestimmte Position der Ziellage, und
- optional Vervollständigen und optional Verdichten der Ziellage von Packguteinheiten.

Erfindungsgemäß befinden sich mindestens mehr als eine der Packguteinheiten der Ziellage während des gesamten Verfahrens auf dem Fördertisch.

Unter dem Begriff von Packgut bzw. Packguteinheiten wird hier und im Folgenden insbesondere jede Art von verpacktem bzw. zu verpackendem Stückgut verstanden. Hierbei handelt es sich nicht nur um Pakete, kartoniert oder unkartoniert, sondern auch um alle Arten von packbaren Waren, die in einzelner Form oder in Form von Gebinden transportabel, also bewegbar, sind.

Bei dem Begriff der Ursprungslage wird im Sinne der vorliegenden Erfindung eine Anordnung bzw. Konfiguration von mehreren Packguteinheiten verstanden. Die Anordnung bzw. Konfiguration von mehreren Packguteinheiten kann beispielsweise zwei, drei, vier, fünf, sechs, sieben, acht, neune, zehn, elf, zwölf oder mehr Packguteinheiten umfassen. Sie bildet eine Anordnung, die - mit den üblichen Abweichungen - in der Ursprungspalette oder auf einer Ursprungszuführeinrichtung in einer Ebene gelagert bzw. lagerbar sind. Diese Anordnung kann mit den geeigneten Mitteln gemeinschaftlich, d.h. nicht nur einzeln, bewegt werden.

Unter dem Begriff der automatisierten Umpalettierung von Packgut wird im Sinn der vorliegenden Erfindung insbesondere verstanden, dass die Packguteinheiten einer Ursprungslage einer Palette oder einer anderen Halte- bzw. Bevorratungseinrichtung in eine Ziellage mit veränderter Konfiguration gebracht werden. Die Zielkonfiguration oder anders ausgedrückt Zielanordnung bzw. Zielstruktur der Packguteinheiten ist zum Beispiel vorgegeben durch eine andere Dimensionierung einer Zielpalette oder Halte- bzw. Bevorratungseinrichtung des Ziels. Dabei kann die Zielkonfiguration alle oder nur einen Teil der Packguteinheiten der Ursprungslage umfassen. Es ist also möglich, dass die Ziellage gleich viele, weniger oder mehr Packguteinheiten als die Ursprungslage aufweist. Gleichermaßen ist auch umfasst, dass die Ziellage nur einen Teil der Packguteinheiten der Ursprungslage umfasst, jedoch zusätzlich Packguteinheiten einer oder mehrerer weiteren Ursprungslage(n). Damit ist vorliegend ausdrücklich auch umfasst, dass die Ziellage Packguteinheiten aus unterschiedlichen Ursprungslagen umfasst, um somit Lagen mit Einheiten unterschiedlicher Eigenschaften (Größe, Gewicht, Farbe, Inhalt, usw.) zu bilden.

Eine Umpalettierung kann aus unterschiedlichen Gründen erfolgen oder notwendig sein.

Je nach Einsatzzweck, Region, Kundenanforderungen etc. werden unterschiedliche Paletten mit unterschiedlichen Formaten benutzt. Sehr verbreitet sind sog. Norm- oder EURO-Paletten (800mm x 1200mm), Industriepaletten (1000mm x 1200mm), Nordamerikanische Paletten (1016mm x 1219mm), Australische Paletten (1165mm x 1165mm) u.a. Viele Betriebe verwenden mehrere dieser Palettenformate gleichzeitig, sodass die Ware häufig von einer Palette in eine andere umpalettiert werden muss.

In anderen Fällen müssen unterschiedliche Produkte in einer Palette gelagert und transportiert werden. Sie können in "Display-pallets" oder "Rainbow pallets" angeordnet werden, wenn die Produkte sortenrein in Spalten angeordnet sind, in Lagen, wenn die Produkte in sortenreinen Lagen übereinander gestapelt werden, in "mixed case pallets", wenn die Produkte in gemischten Lagen gestapelt sind, oder in "true mixed case pallets", wenn die Anordnung der Produkte in der Palette frei wählbar ist.

Ein weiterer Fall einer Umpalettierung im Sinne der vorliegenden Erfindung ergibt sich zum Beispiel, wenn in einer Anlage zur Lagerung und Zwischenspeicherung von Produkten Tablare eingesetzt werden. Die Ware wird aus einer Palette entladen und zu mehreren auf einem Tablar abgelegt. Der innerbetriebliche Transport und die Lagerung der Ware erfolgt dann auf dem Tablar. Hier muss die ursprüngliche Lage der Palette in mehrere kleinere Lagen geteilt werden, um auf dem Tablar abgelegt zu werden.

Omnidirektionale Fördertische sind Förderanlagen, die Objekte in mehrere bzw. alle Richtungen in einer Ebene bewegen können. Im Folgenden werden einige Beispiele für solche omnidirektionalen Fördertische vorgestellt, ohne dass dies eine Beschränkung der Erfindung darstellt.

Die Patentanmeldung US3645379A offenbart ein omnidirektionales Fördersystem bestehend aus omnidirektionalen Rädern, die auf orthogonal angeordneten Wellen moniert sind und gemeinsam angetrieben werden. Das System zeigt ein "Modul" bestehend aus zwei orthogonal angeordneten Rädern, die von zwei Antrieben angetrieben werden. Das System kann Objekte in alle Richtungen bewegen, aber es kann sie nicht rotieren.

Die Anmeldung CN1117928A offenbart eine weitere Ausführung des vorstehend genannten Prinzips. Hier werden mehrere Allseitenräder von einem Antrieb in Gruppen angetrieben. Die in einander oder matrizenförmig nebeneinander angeordnet sein. Ebenfalls hier ist zu sehen, dass die Rollen mechanisch miteinander verbunden sind und dass ein Antrieb somit mehrere Rollen antreibt. Rotationen sind hier bedingt möglich. Sie können nur um festdefinierte Punkte realisiert werden, und zwar dort wo mehrere Module sich treffen. Eine schlupffreie Rotation ist nicht möglich. Translationen und Rotationen können mit diesem System nicht gleichzeitig realisiert werden.

Nach einem ähnlichen Prinzip arbeitet das System der DE102010044239 A1. Hierbei werden mehrere Allseitenräder auf orthogonal angeordnete Wellen montiert und gemeinsam angetrieben. So wie in den oben genannten Beispielen werden hier mehrere Räder von einem Antrieb angetrieben. In der Ausführung aus der Patentanmeldung sind Rotationen nicht möglich. Durch die Kombination von mehreren dieser Module kann ein ähnliches System wie in der Anmeldung CN1117928A realisiert werden, wodurch Rotationen um festdefinierten Punkte möglich werden. Translationen und Rotationen können mit diesem System nicht gleichzeitig realisiert werden.

Die Patentanmeldung GB2348631A offenbart ein "driven ball conveyor", ein Fördersystem bestehend aus mehreren frei rotierenden Kugeln, die auf einer Ebene angeordnet sind. Die Kugeln sind in Gruppen angeordnet und werden gemeinsam von Wellen angetrieben (rotiert), die sich unterhalb der Kugel befinden. Die Wellen dienen gleichzeitig als Stütze für die Kugel. Die Wellen sind orthogonal zueinander angeordnet und durch die Überlagerung der Rotation in x und y können omnidirektionale Bewegungen realisiert werden. Eine Rotation ist nicht möglich.

Das erteilte Patent EP0276881 B1 offenbart ein weiteres omnidirektionales Fördersystem bestehen aus angetriebenen Kugeln. Ähnlich wie bei dem voranstehend genannten Beispiel werden die Kugeln gemeinsam angetrieben. Die Kugeln sind jedoch in Gruppen angeordnet, und diese Gruppen nebeneinander angeordnet, sodass benachbarte Gruppen unterschiedliche Richtungen und Geschwindigkeiten fahren können. Somit ist das Rotieren um die Intersektionen der Module möglich. Durch die Koppelung der Bewegungen der Kugel ist eine schlupffreie Rotation nicht möglich.

Das Patentanmeldung DE102009026388A1 offenbart eine Weiterentwicklung des angetriebenen Kugeltisches. Anders als bei den vorstehend genannten Systemen werden hier die Kugeln einzeln angetrieben. Die Rotation um die x- und y-Achsen werden jeweils von einem Elektromotor realisiert, sodass jede Kugel 2 Antriebe besitzt. Durch die einzel-Kugelsteuerung können beliebig viele Objekte auf beliebigen Bahnen bewegt werden. Translationen und (schlupffreie) Rotationen können gleichzeitig realisiert werden.

Das erteilte Patent EP2874923B1 offenbart ein modulares omnidirektionales Fördersystem bestehend aus einzelangetriebenen Allseitenrollen. Die Module oder Zellen können aneinander montiert werden um eine beliebig große Förderfläche zu bauen. Durch den Einzelradantrieb können Objekte unabhängig voneinander auf beliebigen Bahnen bewegt werden. Rotationen sind um einen beliebigen Punkt möglich. Somit sind Translationen und Rotationen gleichzeitig und schlupffrei möglich.

Alle Typen der vorstehend genannten omnidirektionalen Fördertische sind geeignet, in dem Verfahren der vorliegenden Erfindung eingesetzt zu werden.

In dem erfindungsgemäßen Verfahren weist der Fördertisch eine Fläche auf, die größer ist als die Fläche, die durch eine Ursprungslage der zu konfigurierenden Packguteinheiten eingenommen wird. Dies ist insofern vorteilhaft, da sich das automatisierte Verfahren gerade im Hinblick auf eine zeit- und raumeffiziente Ausführung der Umpalettierungs- bzw. Umkonfigurierungsaufgabe darauf bezieht, dass keine einzelnen Packguteinheiten individuell auf den Fördertisch geladen werden sollen.

In einem ersten Schritt des erfindungsgemäßen Verfahrens wird nun eine Ursprungslage an Packguteinheiten auf dem Fördertisch bereitgestellt. Hierunter sind alle Arten der Bereitstellung umfasst, wie zum Beispiel manuelles Ablegen, das Ablegen durch einen Roboter, durch einen Greifer oder auch das Ablegen durch einen Rollenförderer oder ein Band. Gleichermaßen mitumfasst ist hierbei ausdrücklich, dass zwar mehrere Packguteinheiten einer Ursprungspalette eine Ursprungslage im Sinne der Erfindung bilden, die bereitgestellten Packguteinheiten jedoch nicht alle sondern nur einen Teil einer vollständigen Ebene bzw. Lage einer Palette darstellen können.

In einem nächsten Schritt erfolgt eine automatisierte Vereinzelung der Packguteinheiten durch den Fördertisch derart, dass zwischen mindestens zwei der Packguteinheiten Rangierabstände entstehen.

Nach dem Ablegen der ursprünglichen Lage auf den Fördertisch werden die Packguteinheiten durch gezielte Bewegungen mit anderen Worten so bewegt, dass Lücken zwischen den Einheiten entstehen. Diese Bewegung kann sequenziell bezogen auf die einzelnen Packguteinheiten erfolgen oder bevorzugt einer "Explosionsbewegung" entsprechen. In einer solchen Explosionsbewegung werden die Packguteinheiten, zumindest aber mehrere der Packguteinheiten, gleichzeitig voneinander weg bewegt. Die Berechnung der Bahnen kann durch manuellen Input realisiert werden, bspw. mittels einer Bedienoberfläche. Alternativ kann die Bahn von einem rechnergestützten System vollautomatisch berechnet werden. Das System berechnet dabei die Bewegungen der Packguteinheiten von der Ursprungslage und zu der Ziellage. Die jeweiligen Lagenmuster können manuell oder automatisch definiert werden.

Wenn eine konventionelle omnidirektionale Fördertechnik ohne Einzelradantrieb bzw. - steuerung verwendet wird, können die Packguteinheiten sequenziell, d.h. nicht gleichzeitig sondern nacheinander, translatorisch bewegt oder gedreht werden. Wenn eine omnidirektionale Fördertechnik mit Einzelradantrieb bzw. -steuerung verwendet wird, können die Packguteinheiten auch während der Vereinzelungsbewegung bei Bedarf um eine beliebige Gradzahl gedreht und gleichzeitig translatorisch gefördert werden. Bedingung für die Rotation ist, dass die Lücken zwischen den Objekten groß genug sind, so dass keine Kollisionen zwischen den Objekten entstehen. Bei Einsatz omnidirektionaler Fördertechnik mit Einzelradantrieb können die Packguteinheiten translatorisch, rotatorisch oder in einer aus den genannten kombinierten Bewegungsart bewegt werden.

In einem weiteren Schritt des erfindungsgemäßen Verfahrens erfolgt ein Bewegen der Packguteinheiten auf eine vorbestimmte Position der Ziellage. Sobald die Packguteinheiten wie vorstehend ausgeführt derart vereinzelt wurden, dass sie ausreichende Rangierabstände zueinander aufweisen, können sie durch die Fördertechnik des Fördertisches auf ihre vorbestimmte Position der Ziellage gebracht werden. Hierbei müssen nicht alle Packguteinheiten der Ursprungslage in der Ziellage enthalten sein. Die möglicherweise überzähligen Packguteinheiten können entweder auf dem Fördertisch verbleiben oder sie können in eine Pufferstrecke bewegt werden. Eine solche Pufferstrecke kann zum Beispiel aus einem Tisch, einem Band oder einem Rollenförderer gebildet sein. Das Lagenmuster der Ziellage kann somit vom ursprünglichen Lagenmuster abweichen. Eine gezielte Rotation der Objekte ist auch während des Clusterns, d.h. während des Zusammenfahrens der einzelnen Packguteinheiten, möglich. Abschließend kann die Ziellage auf die Zielpalette übertragen werden.

Es kann sich somit optional ein Vervollständigen und ebenso optional ein Verdichten der Ziellage von Packguteinheiten anschließen. Hierbei ist es beispielsweise möglich, dass auch Packguteinheiten aus einer anderen, weiteren Ursprungslage oder einzelne Packguteinheiten aus einem Pufferbereich zur Ziellage hinzugefügt werden. Sofern noch Abstände oder Lücken zwischen den Packguteinheiten vorhanden sind, kann die Fördertechnik des Fördertisches diese bevorzugt automatisiert minimieren, also die Ziellage verdichten, um ein Abnehmen der Ziellage von dem Fördertisch, beispielsweise durch einen Roboter, Greifer oder auch durch ein Band oder einen Rollenförderer, zu erleichtern.

Erfindungsgemäß ist nun vorgesehen, dass sich mindestens mehr als eine der Packguteinheiten der Ziellage während des gesamten Verfahrens auf dem Fördertisch befinden.

Mit anderen Worten ist es ein Kerngedanke des erfindungsgemäßen Verfahrens, mindestens mehr als eine Packguteinheit der Ziellage während der gesamten Schritte des Verfahrens auf dem Fördertisch zu belassen.

Im Unterschied zu den bisher bekannten Verfahren wird somit bezüglich möglichst vieler Packguteinheiten kein Puffer- oder Zwischenschritt ausgeführt. Insbesondere werden die Packguteinheiten nicht derart vereinzelt, dass sie einzeln bzw. hintereinander in einen Rollenförderer oder ein Band ausgeschleust werden, bevor sie von dort - wiederum einzeln bzw. hintereinander - zurück auf den Fördertisch und zu der Ziellage zusammengeführt werden.

Auf diese Weise kann mit dem erfindungsgemäßen Verfahren deutlich zeitsparender und auf geringerem Raum gearbeitet werden. Zugleich wird dennoch eine größtmögliche Variabilität in Bezug auf die Änderung der Konfiguration von der Ursprungslage zur Ziellage erreicht.

In verschiedenen Ausgestaltungen des Verfahrens kann die Anzahl von Packguteinheiten der Ursprungslage also unterschiedlich oder gleich sein zu der Anzahl von Packguteinheiten der Ziellage.

Auch sehr komplexe Lagenmuster können erfindungsgemäß gehandhabt werden. Hierbei ist weder ein deutlich erhöhter Raumbedarf der Förderanlage nötig noch eine deutliche Erhöhung der Prozesszeit zu befürchten.

Wie vorstehend bereits ausgeführt, können im Fall von überzähligen Packguteinheiten der Ursprungslage Pufferflächen entweder auf dem Fördertisch selbst oder sich an den Fördertisch anschließend vorgesehen werden. Im Fall von unterzähligen Packguteinheiten kann eine neue, weitere Ursprungslage auf den Fördertisch geladen werden oder die zur Vervollständigung der Ziellage benötigten Packguteinheiten können aus einer anderen Quelle, wie zum Beispiel einem Rollenförderer, einem Band, einem Tisch, zu ihrer Position in der Ziellage befördert werden.

Im einfachsten Fall ist die Anzahl der Packguteinheiten der Ursprungslage und der Ziellage identisch und nur die Konfiguration beziehungsweise die Dimensionierung oder Orientierung der Ziellage ist verändert.

In einer weiteren einfachen Ausgestaltung der Erfindung ist vorgesehen, dass zumindest eine Packguteinheit ausschließlich translatorisch bewegt wird.

In einer weiteren Ausgestaltung der Erfindung ist vorgesehen, dass zumindest eine Packguteinheit sowohl translatorisch bewegt als auch rotiert wird.

Hierdurch kann eine sehr hohe Leistung des Verfahrens durch Parallelisierung der Bewegungsschritte erzielt werden. Die hierfür notwenige omnidirektionale Fördertechnik des Fördertisches kann sowohl durch mehrere Räder pro Antrieb als auch bevorzugt durch solche Räder realisiert werden, die jeweils einen eigenen Antrieb aufweisen.

Mit einem Fördertisch, bei dem jedes Einzelrad einen eigenen steuerbaren Antrieb aufweist, kann die zumindest eine Packguteinheit abschnittsweise gleichzeitig sowohl translatorisch bewegt als auch rotiert werden.

Hierdurch wird die Leistungsfähigkeit des Verfahrens und damit die Variabilität und die Schnelligkeit erhöht und der nötige Raumbedarf der Anlage nochmals verringert, da die Packguteinheiten auch auf kleinstem Raum manövriert werden können.

In einer weiteren oder zusätzlichen Ausgestaltung des Verfahrens ist vorgesehen, dass zumindest zwei Packguteinheiten in zueinander unterschiedlichen translatorischen Richtungen oder in unterschiedlichen Drehrichtungen bewegt werden.

Auf diese Weise kann im Unterschied zum Stand der Technik sehr schnell erreicht werden, dass die Packguteinheiten aus der Ursprungsposition heraus den nötigen Rangierabstand erhalten, um in die beabsichtigte Richtung zur Zielposition verbracht zu werden. Da in den bisher bekannten Verfahren die Packguteinheiten einzeln, oftmals nur hintereinander bzw. nacheinander, bewegt werden, weist das erfindungsgemäße Verfahren einen großen Zugewinn an Geschwindigkeit auch in diesem Teilaspekt auf.

In einer bevorzugten Ausführungsform des erfindungsgemäßen Verfahrens ist vorgesehen, dass sich sowohl die Packguteinheiten der Ursprungslage als auch die Packguteinheiten der Ziellage während des gesamten Verfahrens auf dem Fördertisch befinden.

Hierdurch kann sowohl räumlich wie auch zeitlich eine Pufferung der Einzeleinheiten vermieden werden. Ein aufwendiges Verfahren der Packguteinheiten beispielsweise in einen Rollenförderer oder auf ein Band wird in dieser Ausführungsform nicht benötigt. Der Fördertisch kann die Umpalettierung gemäß dem vorliegenden Verfahren ohne weitere Hilfen ausführen. Das Verfahren wird hierdurch nochmals optimiert.

In einer weiteren Ausgestaltung des Verfahrens kann die Fläche des Fördertisches um einen Faktor zwischen 1,2 mal und 5,0 mal größer sein als die Fläche, die durch eine Ursprungslage der zu konfigurierenden Packguteinheiten eingenommen wird.

Als untere Grenze ist erfindungsgemäß vorgesehen, dass der Fördertisch eine Fläche aufweist, die mindestens der der Ursprungslage entspricht. Zudem sollte die Fläche ausreichend gewählt sein, um die nötigen Rangierabstände der Packguteinheiten während der Bewegung ohne Kollision zu gewährleisten. Je nach Anforderung und Einsatzziel kann die Fläche aber auch größer gewählt werden, beispielsweise wenn mehrere Ursprungslagen gleichzeitig auf den Fördertisch befindlich sein sollen, um eine gemischte Ziellage herzustellen. Die Fläche des Fördertisches kann also zum Beispiel 1,5 mal so groß sein wie die Fläche der Ursprungslage, ungefähr 2,8 mal so groß, ungefähr 2,0 mal so groß, ungefähr 2,5 mal so groß, ungefähr 3,0 mal so groß, ungefähr 3,5 mal so groß, ungefähr 4,0 mal so groß, ungefähr 4,5 mal so groß, oder ungefähr 5,0 mal so groß wie die Fläche, die durch eine Ursprungslage der zu konfigurierenden Packguteinheiten eingenommen wird. Sie kann auch noch größer gewählt werden für spezielle Anforderungen an das Verfahren, zum Beispiel bei sehr komplexen Ziellagenmustern mit vielen aus verschiedenen Ursprungslagen stammenden Packguteinheiten oder bei sehr unterschiedlich dimensionierten, jedoch auf einheitlichen Ursprungslagen befindlichen Packguteinheiten.

In einer weiteren Ausführungsform des Verfahrens gemäß der vorliegenden Erfindung ist die Fläche des Fördertisches kleiner als die Fläche, die durch eine Ursprungslage und zusätzlich eine Ziellage der zu konfigurierenden Packguteinheiten eingenommen wird.

Mit anderen Worten kann also die Fläche des Fördertisches so bemessen werden, dass nur jeweils eine Ursprungslage auf den Tisch gebracht wird, diese dann erfindungsgemäß umkonfiguriert wird, und anschließend die so entstandene Ziellage entnommen wird, bevor die nächste Ursprungslage auf den Tisch gelegt wird. Hierdurch ist nur ein extrem kleiner Raumbedarf zur Ausführung der Umpalettierung nötig, so dass auch mehrere dieser Anlagen gleichzeitig nebeneinander aufgebaut werden können und/oder von einem Roboter zum Be- und Entladen bedient werden können.

Zur Steuerung eines erfindungsgemäßen Verfahrens kann eine programmtechnisch eingerichtete Datenverarbeitungsvorrichtung verwendet werden.

Eine solche kann eine Steuerung zur Ausführung des erfindungsgemäßen Verfahrens umfassen. Hierzu kann die Datenverarbeitungsvorrichtung Daten über die Größe, das Gewicht, die Dimensionen und weiterer Parameter oder Eigenschaften der individuellen Packguteinheiten oder von Gruppen von Packguteinheiten in einem Speicher hinterlegt vorliegen haben oder auch aus anderen Quellen, wie beispielsweise Kameras, Sensoren oder Waagen, empfangen. Insbesondere kann die Datenverarbeitungsvorrichtung Daten über die Anfangs- und Endposition einer jeden Packguteinheit auf dem Fördertisch empfangen oder in einem Speicher hinterlegt aufweisen. Aus den Eingangsdaten ist die programmtechnisch eingerichtete Datenverarbeitungsvorrichtung in der Lage, ein Verfahren gemäß der vorliegenden Erfindung zu steuern, indem sie Steuerungsbefehle und Steuerungsdaten insbesondere an die Aktoren, Antriebe der omnidirektionalen Räder, Sensoren und anderen technischen Einrichtungen des Fördertisches sendet und deren Ausführung gegebenenfalls überwacht.

In weiteren Ausgestaltungen der vorliegenden Erfindung ist vorgesehen, dass die Einrichtungen zum omnidirektionalen Bewegen von Packgut Räder aufweisen, wobei entweder jedes Rad einzeln antreibbar ist oder wobei mehrere Räder von einem gemeinsamen Antrieb antreibbar sind.

Wie vorstehend bereits ausgeführt kann mit solchen einzeln oder in Gruppen antreibbaren Rädern in den Einrichtungen zum omnidirektionalen Bewegen von Packgut eine hohe Effizienz des Verfahrens erreicht werden, da die Packguteinheiten entweder sequenziell oder sogar simultan sowohl translatorisch als auch rotatorisch bewegt werden können. Auf diese Weise ist der Raumbedarf der zur Umpalettierung nötigen Bewegungen minimal und in der Folge auch die Prozesszeit, wenn die Packguteinheiten nicht über eine große Strecke verfahren werden müssen.

Darüber hinaus kann zur programmtechnischen Einrichtung von Datenverarbeitungsvorrichtungen zur Steuerungs eines erfindungsgemäßen Verfahrens ein Datenträger oder eine Datenfolge aufweisend Steueranweisungen verwendet werden.

Die Steueranweisungen können beispielsweise in allen gängigen Computersprachen verfasst sein (Java, C++, etc. ) und über digitale oder analoge Schnittstellen an die oder von den Aktoren und/oder Sensoren bzw. Kameras, Waagen etc. der Förderanlage übertragen werden. Nachfolgend wird die Erfindung näher unter Bezug auf die Figuren erläutert. In diesen zeigt:
Fig. 1 eine Prinzipdarstellung aufeinanderfolgender Verfahrensschritte in einer bevorzugten Ausgestaltung der Erfindung,
Fig. 2 eine Prinzipdarstellung aufeinanderfolgender Verfahrensschritte in einer weiteren bevorzugten Ausgestaltung der Erfindung
Fig. 3 eine Prinzipdarstellung aufeinanderfolgender Verfahrensschritte in einer weiteren bevorzugten Ausgestaltung der Erfindung,
Fig. 4 eine Prinzipdarstellung aufeinanderfolgender Verfahrensschritte in einer weiteren bevorzugten Ausgestaltung der Erfindung, und
Fig. 5 eine Prinzipdarstellung aufeinanderfolgender Verfahrensschritte in einer weiteren bevorzugten Ausgestaltung der Erfindung.

Nachfolgend wird die Erfindung eingehender unter Bezugnahme auf den Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt. Es ist ebenfalls anzumerken, dass die Figuren auch nur Teilaspekte der vorliegenden Erfindung widergeben können.

Soweit nachfolgend Verfahren beschrieben werden, sind die einzelnen Schritte eines Verfahrens in beliebiger Reihenfolge anordenbar und/oder kombinierbar, soweit sich durch den Zusammenhang nicht explizit etwas Abweichendes ergibt. Weiterhin sind die Verfahren soweit nicht ausdrücklich anderweitig gekennzeichnet - untereinander kombinierbar. Angaben mit Zahlenwerten sind in aller Regel nicht als exakte Werte zu verstehen sondern beinhalten auch eine Toleranz von +/- 1 % bis zu +/- 10 %.

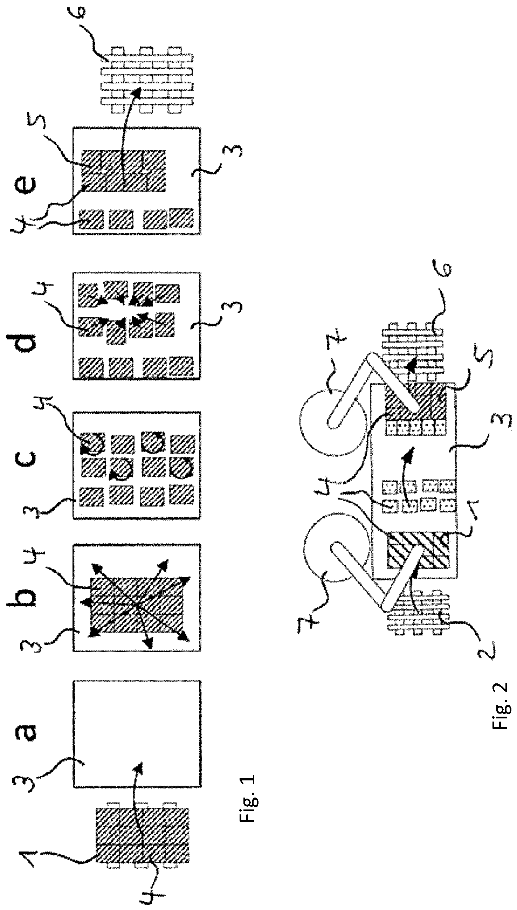

In Figur 1 wird unter der Bezeichnung a zunächst eine Ursprungslage 1 auf einer Ursprungspalette 2 dargestellt. In der Figur wird der Fördertisch 3 mit den Einrichtungen zum omnidirektionalen Bewegen von Packgut lediglich stark vereinfacht als Rechteck dargestellt. Die Ursprungslage 2 wird gebildet von zu rekonfigurierenden Packguteinheiten 4. Der Fördertisch 3 weist eine Fläche auf, die größer ist als die Fläche, die durch eine Ursprungslage 1 der zu konfigurierenden Packguteinheiten 4 eingenommen wird. In dem durch die Richtungspfeile angedeuten Schritt a wird die Ursprungslage 2 auf dem Fördertisch 4 bereitgestellt. Dies kann sowohl manuell als auch (halb)-automatisiert erfolgen. In der gezeigten Ausgestaltung umfasst die Ursprungslage 1 alle Packguteinheiten 4 einer Lage der Ursprungspalette 2. Die lediglich beispielhaft gezeigte Anzahl der Packguteinheiten 4 der Ursprungslage 1 beträgt 12. In der vorliegenden Ausgestaltung der Figur 1 sind die Packguteinheiten 4 gleich dimensioniert, was nicht zwangsläufig der Fall sein muss. In Schritt b der Figur 1 werden die Packguteinheiten wie durch die Richtungspfeile angedeutet vereinzelt. Dies umfasst das Bewegen der Packguteinheiten 4 derart, dass zwischen ihnen ein Rangierabstand entsteht. Diese Bewegung ist von vielen Faktoren abhängig, unter anderen sind hier die Position der Packguteinheiten 4 bei der Bereitstellung auf dem Fördertisch 3, ihre Dimensionen und die spätere Bewegung in die Zielposition bzw. ihre Zielorientierung zu nennen. In Schritt c ist dargestellt, dass die Packguteinheiten 4 individuell rotiert werden, wobei nur diejenigen rotatorisch bewegt werden, die zur Bildung der späteren Ziellage 5 in einer unterschiedlichen Orientierung benötigt werden. Im gezeigten Beispiel ist die Anzahl der Packguteinheiten 4 der Ursprungslage 1 größer als die Anzahl der Packguteinheiten 4 der Ziellage 5. Konkret werden 4 Packguteinheiten 4 der Ursprungslage 1 nicht in die Ziellage 5 übernommen, wohingegen 8 Packguteinheiten 4 der Ursprungslage 1 später die Ziellage 5 bilden. In Schritt d der Figur 1 werden die Packguteinheiten 4 translatorisch bewegt. Die entsprechenden Packguteinheiten 4 werden hierdurch zusammengefahren, um die Abstände der Einheiten 4 zueinander innerhalb der Ziellage 5 zu minimieren und damit die Ziellage 5 zu bilden. Außerdem werden die überzähligen Packguteinheiten 4 der Ursprungslage 1 an den Rand des Fördertisches 3 bewegt, um die sich anschließende Entnahme der Ziellage 5 von dem Fördertisch 3 zu erleichtern. In Schritt e der Figur 1 wird die gebildete Ziellage 5 vom Fördertisch 3 entnommen und auf die Zielpalette 6 geladen. Die überzähligen Packguteinheiten 4 der Ursprungslage 1 verbleiben auf dem Fördertisch 3 und können beispielsweise in einem nächsten Schritt derart bewegt werden, dass die zur Bereitstellung einer neuen Ursprungslage 1 nicht hinderlich sind. Beispielsweise können die Packguteinheiten 4 auch als erste in eine Zielposition einer neuen Ziellage 5 bewegt werden. In der gezeigten Ausführungsform der vorliegenden Erfindung verbleiben damit alle Packguteinheiten der späteren Ziellage 5 auf dem Fördertisch, bis die Ziellage 5 vervollständigt ist und entnommen wird. Die Bewegungsstrecken, die die Packguteinheiten 4 zurücklegen, sind sehr kurz im Vergleich zu bisher bekannten Verfahren und der Raumbedarf für die Ausführung der Umpalettierung ist sehr gering. Durch die sehr kurzen Wege der Bewegung von der Bereitstellung der Ursprungslage 1 bis zur Erreichung der jeweiligen Position in der Ziellage 5 kann zudem eine erhebliche Zeitersparnis erzielt werden.

In Figur 2 wird eine weitere bevorzugte Ausgestaltung des erfindungsgemäßen Verfahrens in einer skizzenhaften Prinzipdarstellung gezeigt. Auf einem Fördertisch 3 befinden sich Packguteinheiten 4 von insgesamt drei verschiedenen Ursprungslagen 1, jeweils durch unterschiedliche Schraffur dargestellt. Ein Roboter 7 greift jeweils eine Ursprungslage 1 und stellt sie auf dem Fördertisch 3 bereit. Nach einer Vereinzelungsbewegung werden die Packguteinheiten 4 translatorisch in Richtung der Ziellageposition bewegt. Die Ziellage 5 weist in der gezeigten Ausgestaltung eine größere Anzahl an Packguteinheiten 4 auf als eine Ursprungslage 1. So werden die zur Vervollständigung der Ziellage 5 benötigten Packguteinheiten 4 von einer weiteren Ursprungslage 1 durch entsprechendes Vereinzeln und Hinzufahren zur Ziellage 5 hinzugefügt. Ein zweiter Roboter entnimmt die Ziellage 5 nach Vervollständigung und ggf. Verdichten vom dem Fördertisch 3 und setzt sie auf einer Zielpalette 6 ab. In der Zwischenzeit oder auch nach Entnahme der ersten Ziellage 5 kann eine weitere, dritte Ursprungslage 1 auf dem Fördertisch 3 bereitgestellt werden. In einem nächsten Schritt können die verbliebenen Packguteinheiten 4 der zweiten Ursprungslage 1 zur Ziellagenposition bewegt werden. Mit den zur Vervollständigung der zweiten Ziellage 5 benötigten Packguteinheiten 4 aus der dritten Ursprungslage 1 kann in einer Fortführung des Verfahrens mit Vereinzeln und Bewegen in die vorbestimmte Position die zweite Ziellage 5 zur Entnahme von dem Fördertisch 3 vorbereitet werden. Auch in dieser gezeigten Ausführungsform der vorliegenden Erfindung verbleiben damit alle Packguteinheiten 4 der späteren Ziellage 5 auf dem Fördertisch, bis die Ziellage 5 vervollständigt ist und entnommen wird. Die Bewegungsstrecken, die die Packguteinheiten 4 zurücklegen, sind sehr kurz im Vergleich zu bisher bekannten Verfahren und der Raumbedarf für die Ausführung der Umpalettierung ist sehr gering. Durch die sehr kurzen Wege der Bewegung von der Bereitstellung der Ursprungslage 1 bis zur Erreichung der jeweiligen Position in der Ziellage 5 kann zudem eine erhebliche Zeitersparnis erzielt werden.

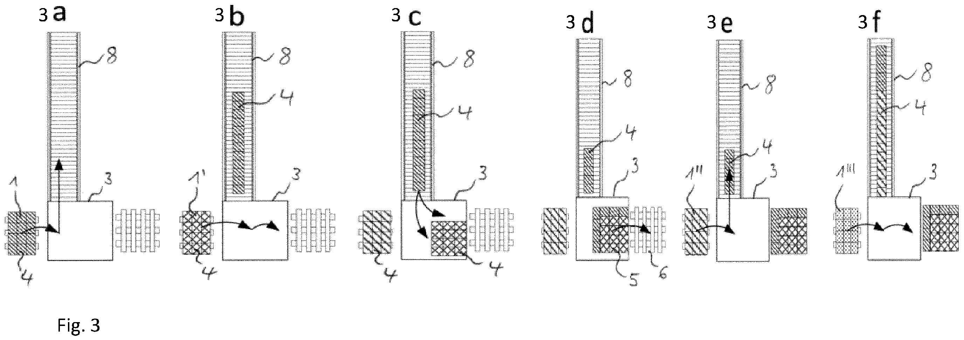

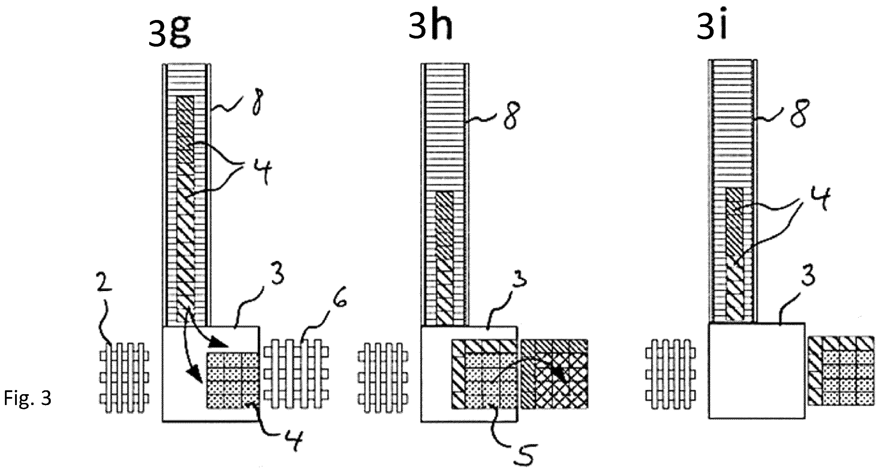

In Figur 3 wird eine weitere bevorzugte Ausgestaltung des erfindungsgemäßen Verfahrens in einer Prinzipskizze dargestellt. In Schritt a wird eine erste Ursprungslage 1 durch den Fördertisch 3 zunächst in eine Pufferstrecke 8 in Form eines Rollenförderers bewegt. In Schritt b wird eine zweite Ursprungslage 1' auf dem Fördertisch 3 bereitgestellt und die Packguteinheiten 4 der zweiten Ursprungslage 1' werden in ihre entsprechenden Positionen der Ziellage 5 bewegt. Aus der Pufferstrecke des Rollenförderers 8 werden in Schritt c Packguteinheiten 4 der ersten Ursprungslage 1 auf dem Fördertisch 3 bereitgestellt und derart bewegt, dass sie wie in Schritt d gezeigt die Ziellage 5, die auch in dieser Ausgestaltung eine größere Anzahl an Packguteinheiten 4 aufweist als die Ursprungslage 1, vervollständigen. Die so erzeugte Ziellage 5 wird in Schritt d auf eine Zielpalette 6 verbracht. In Schritt e kann in Fortführung des Verfahrens eine neue Ursprungslage 1" auf dem Fördertisch 3 bereitgestellt werden und durch die Fördereinrichtungen des Fördertisches 3 in eine Pufferstrecke 8 verbracht werden. Eine vierte Ursprungslage 1‴ kann in Schritt f wie bereits die zweite Ursprungslage 1' in Schritt b auf dem Fördertisch 3 bereitgestellt werden und die Packguteinheiten dieser Ursprungslage 1‴ können an ihre jeweilige Position der Ziellage 5 bewegt werden. In prinzipieller Wiederholung des Schritts c wird in Schritt g wiederum eine Vervollständigung der Ziellage 5 durch Bewegen der Packguteinheiten 4 der gepufferten Packguteinheiten auf den Fördertisch 3 und in die entsprechende Position der Ziellage 5 erreicht. Die zweite vollständige Ziellage 5 kann in Schritt h auf die erste Ziellage 5 der Zielpalette 6 abgelegt werden. In Schritt i können in einem abschließenden Schritt zum Beispiel die restlichen Packguteinheiten 4 aus der Pufferstrecke 8 herausgefahren werden. Die können entweder als überzählig entnommen werden oder zu einer letzten Ziellage 5 zusammengestellt werden. In dieser Ausgestaltung des erfindungsgemäßen Verfahrens verbleiben die Packguteinheiten 4 der zweiten Ursprungslage 1' auf dem Fördertisch 3. Auch wenn in dieser Ausgestaltung die Packguteinheiten 4 der ersten Ursprungslage 1 zunächst in eine Pufferstrecke 8 gefahren werden, um später zur Vervollständigung der Ziellage 5 wieder auf dem Fördertisch 3 bereitgestellt werden, wird dennoch der Kerngedanke des erfindungsgemäßen Verfahrens und die damit verbundenen Vorteile sehr gut verwirklicht und erreicht.

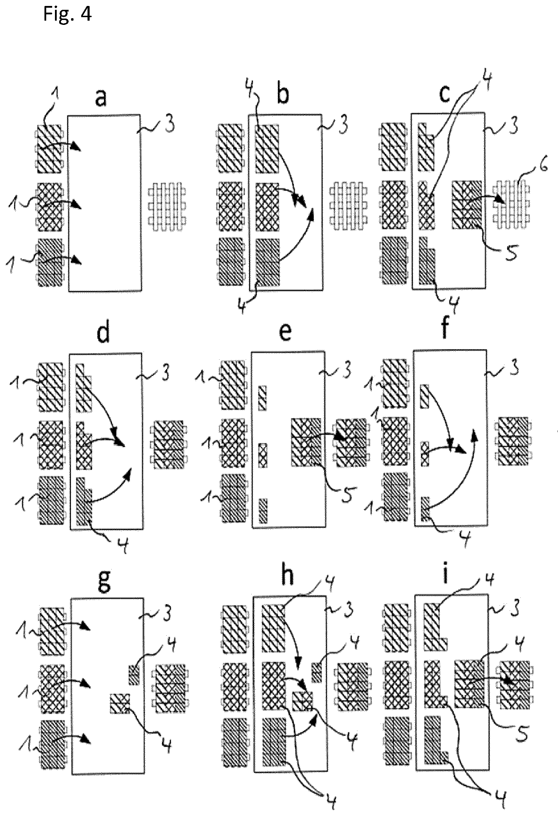

In Figur 4 wird in einer skizzenhaften Prinzipdarstellung eine weitere bevorzugte Ausgestaltung des erfindungsgemäßen Verfahrens gezeigt. In Schritt a werden drei Ursprungslagen 1 gleichzeitig oder nacheinander auf dem Fördertisch 3 bereitgestellt. Zur besseren Übersicht sind die Packguteinheiten 4 der jeweiligen Ursprungslage 1 gemäß ihrer Zugehörigkeit zur Ursprungslage anders schraffiert als die Packguteinheiten 4 einer anderen Ursprungslage 1. In Schritt b werden jeweils diejenigen Packguteinheiten 4 rotatorisch und/oder translatorisch aus der Ursprungslage 1 vereinzelt, die zur Ziellage 5 gehören sollen. Gemäß den rein schematisch angedeuteten Richtungspfeilen werden die vereinzelten Packguteinheiten 4 in ihre Zielposition bewegt, um im nächsten Schritt c die Ziellage 5 zu bilden. In Schritt c schließt sich ggf. eine Verdichtungsbewegung an, bevor die Ziellage 5 von dem Fördertisch 3 entnommen werden kann und auf die Zielpalette 6 abgelegt werden kann. In Schritt d werden weitere bisher in ihrer Ursprungsposition verbliebenen Packguteinheiten 4 aus jeder der drei Ursprungslagen 1 quasi in einer Wiederholung des Schritts b zunächst von der Ursprungslage 1 vereinzelt und dann in ihre jeweilige Zielposition der Ziellage 5 bewegt, wie durch die Richtungspfeile vereinfacht angedeutet. In Schritt e wird die Ziellage 5 ggf. verdichtet und von dem Fördertisch entnommen. Sie kann auf die erste Ziellage 5 auf der Zielpalette 6 abgelegt werden oder auch auf eine neue Zielpalette 6. In Schritt f werden die restlichen Packguteinheiten 4 der drei Ursprungslagen 1 vereinzelt und in ihre Zielposition in der Ziellage 5 bewegt. Da die dritte Ziellage 5 damit jedoch nicht vollständig gebildet werden kann, werden in Schritt g drei neue Ursprungslagen 1 auf dem Fördertisch 3 bereitgestellt. In prinzipieller Wiederholung des Schritts b werden in Schritt h aus der jeweiligen neuen Ursprungslage 1 die Packguteinheiten 4, die zur Vervollständigung der dritten Ziellage 5 benötigt werden vereinzelt und in ihre Zielposition zu der Ziellage 5 bewegt. Hierbei können wiederum sowohl Rotationen als auch Translationen durch den Fördertisch 3 ausgeführt werden. Die Bewegungen sich schematisch durch die Richtungspfeile angegeben. In Schritt i wird die ggf. verdichtete dritte Ziellage 5 von dem Fördertisch entnommen und auf der Zielpalette 6, ggf. auf die ersten bzw. zweite vorher erzeugte Ziellage 5, abgelegt. In dieser Ausgestaltung der Erfindung verbleiben ebenfalls alle Packguteinheiten 4 der jeweiligen Ziellagen 5 während des gesamten Vorgangs auf dem Fördertisch 3. Der Fördertisch ist zur Aufnahme von mehreren unterschiedlichen Ursprungslagen 1 größer dimensioniert als in den vorher gezeigten Ausgestaltungen. Dennoch entfallen sehr raumintensive Pufferstrecken wie sie in den bisher bekannten Verfahren des Standes der Technik nötig wären. Auf kleinstem Raum und in sehr kurzer Zeit werden in der hier dargestellten Ausgestaltung auch komplexe Lagenmuster der Ziellage realisiert.

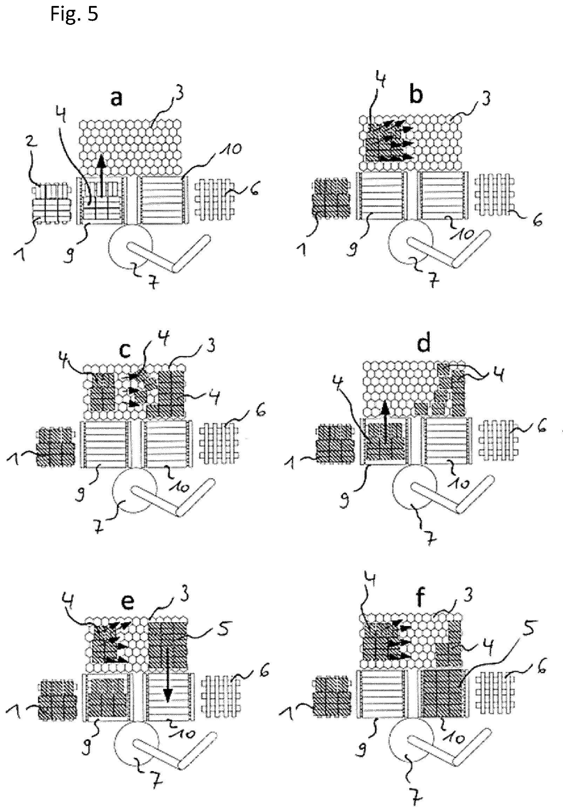

In Figur 5 wird in einer schematischen Prinzipdarstellung eine weitere bevorzugte Ausgestaltung des erfindungsgemäßen Verfahrens gezeigt. In Schritt a wird eine Ursprungslage 1 zunächst auf einen Eingangs-Rollenförderer 9 geladen. Der Rollenförderer 9 stellt die Ursprungslage 1 auf dem Fördertisch 3 bereit. In dieser Ausgestaltung umfasst die bereitgestellte Ursprungslage 1 nicht alle Packguteinheiten einer Lage einer Ursprungspalette 2. Die Ursprungslage 1 umfasst in dieser Ausgestaltung vielmehr eine Reihe einer Lage der Ursprungspalette 2 und wird entsprechend sozusagen zeilenweise auf dem Fördertisch 3 bereitgestellt. Das Laden von der Ursprungspalette 2 auf den Eingangs-Rollenförderer 9 kann zum Beispiel durch einen Roboter 7automatisiert erfolgen. In Schritt b werden die Packguteinheiten 4 der Ursprungslagen 1 auf dem Fördertisch 3 vereinzelt. In Schritt c werden die Packguteinheiten 4 dann an ihre Zielposition der Ziellage 5 bewegt. In der hier gezeigten Ausgestaltung kann das sowohl simultan als auch sequenziell, beispielsweise jeweils 2 Packguteinheiten 4 gleichzeitig, oder auch in Orientierung zur Ziellage zeilenweise, durchgeführt werden. In Schritt d ist angedeutet, dass es auch möglich ist, eine weitere Ursprungslage 1 von dem Eingangs-Rollenförderer 9 auf dem Fördertisch bereitzustellen, während sich die Packguteinheiten 4 der ersten Ursprungslage noch nicht in ihrer abschließenden Position der Ziellage 5 befinden. In Schritt e wird die Ziellage 5 vervollständigt und ggf. verdichtet und durch den Fördertisch 3 an einen Ausgangs-Rollenförderer 10 abgegeben. Von dem Ausgangs-Rollenförderer 10 kann die Ziellage 5 beispielsweise durch den Roboter 7 entnommen und auf eine Zielpalette 6 abgelegt werden. Gleichzeitig zu der oder vor oder nach der Übergabe der ersten Ziellage 5 an den Ausgangsrollenförderer 10 können aus der zweiten auf dem Fördertisch 3 bereitgestellten Ursprungslage 1 aus Schritt d bereits weitere Packguteinheiten 4 vereinzelt werden. Zudem können solche Packguteinheiten 4 auch bereits in Richtung ihrer Zielposition in der zu bildenden neuen Ziellage 5 bewegt werden. In Schritt f kann die Bereitstellung von neuen Ursprungslagen 1, die Vereinzelung der neu bereitgestellten Packguteinheiten 4 und deren Bewegen in die jeweiligen Zielpositionen zur Bildung und Vervollständigung der Ziellage 5 fortgeführt werden. In dieser Ausgestaltung des erfindungsgemäßen Verfahrens kann eine quasi kontinuierliche Umpalettierung ausgeführt werden, die nicht nur "batch-weise" sondern "im Fluss" ablaufen kann. Dabei ist besonders vorteilhaft, dass sowohl der Raumbedarf der Ausgestaltung als auch die benötigte Zeit zur Umpalettierung minimal ist. Weiterhin ist herauszustellen, dass durch Kombination der Bewegungen durch die Rollenförderer 9, 10 mit den erfindungsgemäßen Bewegungen auf dem Fördertisch 3 eine hohe Variabilität auch in Bezug auf vor- oder nachgelagerte Schritte ermöglicht wird. So kann beispielsweise der Roboter 7 an einer passenden Stelle in der Lagerhalle platziert werden, die Zielpalette 6 direkt an eine Folierungsstation übergeben werden etc. die hierzu nötigen Räume und Wege können durch preiswerte und verlässliche Rollenförderer angepasst werden, ohne die Vorteile des erfindungsgemäßen Verfahrens einzuschränken oder zu verlieren.

### Bezugszeichenliste

- 1: Ursprungslage, auch 1', 1", 1‴
- 2: Ursprungspalette
- 3: Fördertisch
- 4: Packguteinheit
- 5: Ziellage
- 6: Zielpalette
- 7: Roboter
- 8: Pufferstrecke
- 9: Eingangs-Rollenförderer
- 10: Ausgangs-Rollenförderer

## Patentansprüche

1. Verfahren zur automatisierten Umpaletierung von Packgut, das Verfahren durchzuführen mit einem Fördertisch (3) mit Einrichtungen zum omnidirektionalen Bewegen von Packgut aus einer Ursprungslage (1), gebildet von zu rekonfigurierenden Packguteinheiten (4), in eine Ziellage (5), gebildet von Packguteinheiten (4), wobei der Fördertisch (3) eine Fläche aufweist, die größer ist als die Fläche, die durch eine Ursprungslage (1) der zu konfigurierenden Packguteinheiten (4) eingenommen wird, aufweisend die folgenden Schritte:
• Bereitstellen einer Ursprungslage (1) von Packguteinheiten (4) auf dem Fördertisch (3),
• automatisierte Vereinzelung der Packguteinheiten (4) durch den Fördertisch (3) derart, dass zwischen mindestens zwei der Packguteinheiten (4) Rangierabstände entstehen,
• Bewegen der Packguteinheiten (4) auf eine vorbestimmte Position der Ziellage (5), und
• optional Vervollständigen und optional Verdichten der Ziellage (5) von Packguteinheiten (4),
wobei sich mindestens mehr als eine der Packguteinheiten (4) der Ziellage (5) während des gesamten Verfahrens auf dem Fördertisch (3) befinden.

2. Verfahren nach Anspruch 1, **dadurch gekennzeichnet, dass** die Anzahl von Packguteinheiten (4) und/oder das Lagenmuster der Ursprungslage (1) unterschiedlich oder gleich ist zu der Anzahl von Packguteinheiten (4) und/oder dem Lagenmuster der Ziellage (5).

3. Verfahren nach Anspruch 1 oder 2, **dadurch gekennzeichnet, dass** zumindest eine Packguteinheit (4) sowohl translatorisch bewegt als auch rotiert wird.

4. Verfahren nach Anspruch 3, **dadurch gekennzeichnet, dass** die zumindest eine Packguteinheit (4) abschnittsweise gleichzeitig sowohl translatorisch bewegt als auch rotiert wird.

5. Verfahren nach einem der vorhergehenden Ansprüche, **dadurch gekennzeichnet, dass** zumindest zwei Packguteinheiten (4) in zueinander unterschiedlichen translatorischen Richtungen oder in unterschiedlichen Drehrichtungen bewegt werden.

6. Verfahren nach einem der vorhergehenden Ansprüche, **dadurch gekennzeichnet, dass** sich sowohl die Packguteinheiten (4) der Ursprungslage (1) als auch die Packguteinheiten (4) der Ziellage (5) während des gesamten Verfahrens auf dem Fördertisch (3) befinden.

7. Verfahren nach einem der vorhergehenden Ansprüche, **dadurch gekennzeichnet, dass** die Fläche des Fördertisches (3) um einen Faktor zwischen 1,2 mal und 5,0 mal größer ist als die Fläche, die durch eine Ursprungslage (1) der zu konfigurierenden Packguteinheiten (4) eingenommen wird.

8. Verfahren nach einem der vorhergehenden Ansprüche 1 bis 6, **dadurch gekennzeichnet, dass** die Fläche des Fördertisches (3) kleiner ist als die Fläche, die durch eine Ursprungslage (1) und eine Ziellage (5) der zu konfigurierenden Packguteinheiten (4) eingenommen wird.

9. Verfahren nach einem der vorhergehenden Ansprüche, **dadurch gekennzeichnet, dass** die Einrichtungen zum omnidirektionalen Bewegen von Packgut Räder aufweisen, wobei entweder jedes Rad einzeln antreibbar ist oder wobei mehrere Räder von einem gemeinsamen Antrieb antreibbar sind.

## Claims

1. Method for automated repalletizing of packaged goods, the method to be carried out with a conveyor table (3) with devices for the omnidirectional movement of packaged goods from an original layer (1), formed by units of packaged goods (4) to be reconfigured, to a target layer (5), formed by units of packaged goods (4), wherein the conveyor table (3) has an area that is larger than the area that is occupied by an original layer (1) of the units of packaged goods (4) to be configured, having the following steps:
• providing an original layer (1) of units of packaged goods (4) on the conveyor table (3),
• automated separation of the units of packaged goods (4) by the conveyor table (3) such that manoeuvring distances are created between at least two of the units of packaged goods (4),
• moving the units of packaged goods (4) to a predetermined position of the target layer (5), and
• optionally completing and optionally compressing the target layer (5) of units of packaged goods (4),
wherein at least more than one of the units of packaged goods (4) of the target layer (5) are on the conveyor table (3) during the entire process.

2. Method according to Claim 1, **characterized in that** the number of units of packaged goods (4) and/or the layer pattern of the original layer (1) is different to or the same as the number of units of packaged goods (4) and/or the layer pattern of the target layer (5).

3. Method according to Claim 1 or 2, **characterized in that** at least one unit of packaged goods (4) is both moved translationally and rotated.

4. Method according to Claim 3, **characterized in that** the at least one unit of packaged goods (4) is both moved translationally and rotated simultaneously in sections.

5. Method according to one of the preceding claims, **characterized in that** at least two units of packaged goods (4) are moved in mutually different translatory directions or in different directions of rotation.

6. Method according to one of the preceding claims, **characterized in that** both the units of packaged goods (4) of the original layer (1) and the units of packaged goods (4) of the target layer (5) are on the conveyor table (3) during the entire process.

7. Method according to one of the preceding claims, **characterized in that** the area of the conveyor table (3) is between 1.2 times and 5.0 times larger than the area that is occupied by an original layer (1) of the units of packaged goods (4) to be configured.

8. Method according to one of the preceding Claims 1 to 6, **characterized in that** the area of the conveyor table (3) is smaller than the area that is occupied by an original layer (1) and a target layer (5) of the units of packaged goods (4) to be configured.

9. Method according to one of the preceding claims, **characterized in that** the devices for the omnidirectional movement of packaged goods have wheels, wherein either each wheel can be driven individually or wherein a plurality of wheels can be driven by a common drive.

## Revendications

1. Procédé de dépalettisation automatisée de marchandises emballées, le procédé étant à exécuter avec une table de transport (3) avec des équipements pour le déplacement omnidirectionnel de marchandises emballées d'une couche originale (1), formée d'unités de marchandises emballées (4) à reconfigurer, à une couche à réaliser (5), formée d'unités de marchandises emballées (4), sachant que la table de transport (3) comporte une surface qui est plus grande que la surface, qui est occupée par une couche originale (1) des unités de marchandises emballées (4) à configurer, comportant les étapes suivantes :
• préparation d'une couche originale (1) d'unités de marchandises emballées (4) sur la table de transport (3),
• séparation automatisée des unités de marchandises emballées (4) par la table de transport (3) de telle manière que des intervalles de triage sont créés entre au moins deux des unités de marchandises emballées (4),
• déplacement des unités de marchandises emballées (4) à une position prédéterminée de la couche à réaliser (5), et
• achèvement en option et compactage en option de la couche à réaliser (5) d'unités de marchandises emballées (4), sachant qu'au moins plus d'une des unités de marchandises emballées (4) de la couche à réaliser (5) se trouvent sur la table de transport (3) pendant tout le procédé.

2. Procédé selon la revendication 1, **caractérisé en ce que** le nombre d'unités de marchandises emballées (4) et/ou le modèle de couche de la couche originale (1) est différent ou identique au nombre d'unités de marchandises emballées (4) et/ou au modèle de couche de la couche à réaliser (5).

3. Procédé selon la revendication 1 ou 2, **caractérisé en ce qu'**au moins une unité de marchandises emballées (4) est déplacée tant en translation qu'en rotation.

4. Procédé selon la revendication 3, **caractérisé en ce qu'**au moins une unité de marchandises emballées (4) est en partie simultanément déplacée tant en translation qu'en rotation.

5. Procédé selon l'une quelconque des revendications précédentes, **caractérisé en ce qu'**au moins deux unités de marchandises emballées (4) sont déplacées dans des directions translatoires différentes les unes par rapport aux autres ou bien dans des directions de rotation différentes.

6. Procédé selon l'une quelconque des revendications précédentes, **caractérisé en ce que** tant les unités de marchandises emballées (4) de la couche originale (1) que les unités de marchandises emballées (4) de la couche à réaliser (5) se trouvent sur la table de transport (3) pendant tout le procédé.

7. Procédé selon l'une quelconque des revendications précédentes, **caractérisé en ce que** la surface de la table de transport (3) est plus grande d'un facteur situé entre 1,2 fois et 5,0 fois que la surface, qui est occupée par une couche originale (1) des unités de marchandises emballées (4) à configurer.

8. Procédé selon l'une quelconque des revendications précédentes de 1 à 6, **caractérisé en ce que** la surface de la table de transport (3) est plus petite que la surface, qui est occupée par une couche originale (1) et une couche à réaliser (5) des unités de marchandises emballées (4) à configurer.

9. Procédé selon l'une quelconque des revendications précédentes, **caractérisé en ce que** les équipements pour le déplacement omnidirectionnel des marchandises emballées comportent des roues, sachant que soit chaque roue peut être entraînée individuellement, soit plusieurs roues peuvent être entraînées par un système d'entraînement commun.
